# FASCICULE DE BREVET EUROPEEN

(11) **EP 4 363 350 B1**
(45) Date de publication et mention de la délivrance du brevet: **27.05.2026**
(21) Numéro de dépôt: 22735440.4
(22) Date de dépôt: 28.06.2022
(51) Int. Cl.: B65G 1/04, B65G 15/36, B65G 15/44

(54) **SYSTÈME D'ÉLÉVATION DE CHARGES ET SYSTEME DE STOCKAGE AUTOMATISE COMPRENANT UN TEL SYSTÈME D'ÉLÉVATION DE CHARGES**
LASTHEBESYSTEM UND AUTOMATISIERTES LAGERSYSTEM MIT EINEM SOLCHEN LASTHEBESYSTEM
LOAD LIFTING SYSTEM AND AUTOMATED STORAGE SYSTEM COMPRISING SUCH A LOAD LIFTING SYSTEM

(30) Priorité: 28.06.2021 FR 2106944
(43) Date de publication de la demande: 08.05.2024
(73) Titulaire: Fives Xcella, 56260 Lamor-Plage (FR)
(72) Inventeur: COSTANTINI, Eric, 56100 Lorient (FR); CHERIF IDRISSI EL GANOUNI, Oussama, 56100 Lorient (FR)
(74) Mandataire: Novagraaf Group
(86) Numéro de dépôt international: PCT/EP2022/067679
(87) Numéro de publication internationale: WO 2023/275018

(56) Documents cités:
- DE-A1- 102009 025 906
- DE-A1- 102012 019 356
- DE-A1- 19 949 545
- DE-A1- 2 453 463
- GB-A- 1 176 268
- GB-A- 902 200
- JP-A- 2006 027 884
- US-A1- 2017 245 437
- US-A1- 2018 149 233

## Description

### Domaine technique de l'invention

L'invention porte sur un un système de levage de charge dans le domaine de l'intralogistique. Plus particulièrement, une application concerne un système de levage d'un système de stockage automatisé d'articles.

### Etat de la technique

Dans un tel système de stockage automatisé d'articles, des moyens de traction sont utilisés pour monter ou descendre des charges dans un rayonnage, par exemple pour passer une charge d'un niveau de stockage à l'autre.

Parmi les moyens de traction connus, on trouve les câbles, les chaines et les courroies. Ces dernières présentent l'avantage d'être souples, de nécessiter peu de maintenance et d'être silencieuses.

Une courroie est généralement constituée :
- d'un corps souple, par exemple en élastomère, en polyuréthane ou en thermoplastique, et
- d'un ensemble de câbles de traction noyés dans le corps souple, lesdits câbles peuvent être en inox, en fibre de verre, en composite, etc.

Certaines applications peuvent nécessiter, en plus, des moyens d'accrochage qui se fixent sur le corps de la courroie pour accrocher la charge à lever qui peut être un chariot automatiquement guidé pour le passer d'un niveau d'entrée de charges à un niveau de stockage, par exemple.

Parmi les configurations existantes de tels moyens d'accrochages, nous connaissons des taquets agencés pour être fixés sur des inserts métalliques noyés dans la matière souple ou la traversant d'un coté à l'autre. Chaque taquet est fixé par une ou plusieurs vis aux inserts métalliques. Le document GB1176268 divulgue une telle configuration, en particulier un ensemble de traction comprenant une courroie présentant un corps souple et une pluralité de câbles de traction noyés dans le corps, et au moins un tasseau de traction, configuré pour porter un dispositif d'accrochage destiné à être fixé sur ledit tasseau.

Un inconvénient de cette configuration est que la matière du corps souple est sollicitée lors d'une traction et à cause de la présence des inserts cette matière est fragilisée limitant ainsi le poids de la charge pouvant être montée.

Un autre inconvénient, réside dans le fait que le passage des inserts et/ou des vis de fixation peut couper certains câbles de traction ce qui peut fragiliser davantage la courroie.

L'objectif de la présente invention est de proposer un système d'élévation de charges permettant de résoudre les problèmes décrit ci-dessus.

### Résumé de l'invention

A cet effet, l'invention concerne un système d'élévation de charges adapté pour un système de stockage automatisé d'articles, le système d'élévation comportant un ensemble de traction comprenant :
- une courroie présentant un corps souple et une pluralité de câbles de traction noyés dans le corps,
- au moins un tasseau de traction, configuré pour porter un dispositif d'accrochage destiné à être fixé sur ledit tasseau,
dans lequel le tasseau présente une liaison mécanique directe avec tout ou partie de la pluralité des câbles de traction.

Par liaison mécanique directe on entend le fait qu'on n'utilise pas d'autre élément pour réaliser la liaison mécanique entre le tasseau et les câbles de traction, par exemple on utilise pas de couture, ni d'autres moyens accessoires pour fixer le tasseau au câbles.

Un câble de traction peut comprendre une âme seule (par exemple métallique) ou une âme et une enveloppe (par exemple en matériau élastomère), dans ce cas la liaison mécanique directe peut être via l'enveloppe du câble.

Grâce à la liaison directe entre le tasseau et les câbles de traction, les efforts engendrés lors d'une traction d'une charge sont supportés par les câbles de traction. En conséquence, la matière du corps souple n'est pas sollicitée et n'est donc pas fragilisée. Il devient donc possible de soulever des charges importantes, tel qu'un chariot automatiquement guidé, sans risquer une rupture de la courroie.

Selon certains exemples de réalisation, les câbles de traction passent au travers du tasseau. Cette configuration présente l'avantage d'être facile à fabriquer. Par exemple, le tasseau peut être moulé directement sur les câbles de traction de sorte que la matière du tasseau couvre une partie des câbles de traction.

Avantageusement, un sertissage peut être ajouté pour renforcer le maintien du tasseau autour des câbles.

Selon certains exemples de réalisation, le tasseau est entouré par des câbles de traction. Cette configuration permet d'avoir une très forte robustesse car les efforts sont supportés par les câbles de traction.

Dans certains exemples de réalisation, le dispositif d'accrochage peut être un taquet. Ce dernier se fixe sur un tasseau, par exemple par vissage.

Dans des exemples de réalisation, le corps de courroie peut comprendre deux portions, la première portion comprenant des câbles de traction présentant des premiers anneaux de liaison, la deuxième portion comprend des câbles de traction présentant des deuxièmes anneaux de liaison, configurés pour s'emboiter avec lesdits premiers anneaux de liaison, le tasseau formant un axe de liaison entre les deux portions passant par les premiers et les deuxièmes anneaux. Cette configuration présente un double avantage, la facilité de fabrication et la robustesse. En effet, les portions des courroies sont fabriquées séparément, ensuite assemblées avec comme moyen d'assemblage un tasseau également fabriqué séparément. De plus, le fait que les câbles de traction entourent le tasseau via les anneaux d'assemblage augmente la robustesse de l'ensemble de traction.

Selon des exemples de réalisation, le tasseau peut comprendre une première extrémité et une deuxième extrémité, saillantes chacune d'un côté opposé du corps de la courroie, le dispositif d'accrochage a la forme d'un cavalier configuré pour être fixé audites deux extrémités du tasseau. Cette fixation est simple à réaliser et robuste puisqu'aucun perçage n'est nécessaire dans le tasseau pour des vis et la fixation au niveau des extrémités saillantes donne davantage de robustesse.

Dans des exemples de réalisation, le corps de la courroie peut comprendre une pluralité de portions configurées pour être fixées les unes aux autres pour former la courroie, au moins une portion comprend un tasseau.

L'invention concerne aussi un système de stockage automatisé d'articles comprenant un système d'élévation tel que décrit ci-dessus et un chariot automatiquement guidé comprenant un moyen d'accrochage configuré pour coopérer avec un dispositif d'accrochage fixé à un tasseau d'un ensemble de traction tel que décrit ci-dessus.

Avantageusement le système de stockage automatisé d'articles peut comprendre un rayonnage présentant une pluralité de niveaux de stockage d'articles, dans lequel ledit système d'élévation relie lesdits niveaux de stockage et est apte à permettre le passage d'un chariot automatiquement guidé d'un niveau de stockage à l'autre.

### Brève description des figures

D'autres particularités et avantages de l'invention apparaîtront dans la description ci-après en relation avec les dessins annexés, donnés à titre d'exemples non limitatifs, dans lesquelles :
[Fig.1] la figure 1 représente un premier exemple d'ensemble de traction selon l'invention ;
[Fig.2], [Fig.3] les figures 2 et 3 montrent un deuxième exemple d'ensemble de traction selon l'invention ;
[Fig.4] la figure 4 montre un troisième exemple d'ensemble de traction selon l'invention ;
[Fig.5] la figure 5 est une vue en coupe transversale d'un ensemble de traction conforme à celui de la figure 4 comprenant en outre un cavalier ;
[Fig.6] la figure 6 montre un quatrième exemple d'ensemble de traction selon l'invention ;
[Fig.7] la figure 7 montre un système de stockage automatisé selon l'invention.

Dans la suite de la description, des éléments présentant une structure identique ou des fonctions analogues peuvent être désignés par les mêmes références.

### Description détaillée

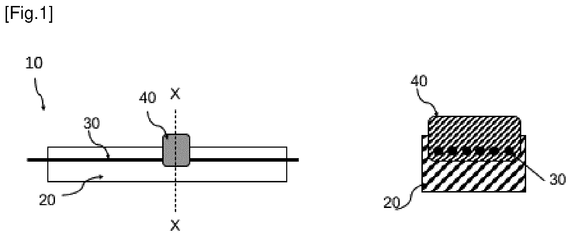

La figure 1 représente schématiquement un premier exemple simplifié d'un ensemble de traction 10 selon l'invention. L'ensemble de traction 10 tel que montré à gauche de la figure 1, comprend :
- une courroie présentant un corps 20 souple (par exemple en élastomère) et une pluralité de câbles 30 de traction, noyés dans le corps 20,
- au moins un tasseau 40 de traction, configuré pour porter un dispositif d'accrochage destiné à être fixé sur ledit tasseau (non représenté sur la figure 1).
Selon l'invention, le tasseau 40 présente une liaison mécanique directe avec tout ou partie de la pluralité des câbles 30.

En particulier, dans ce mode de réalisation tel que présenté selon la vue en coupe suivant l'axe X-X (à droite de la figure 1), des câbles 30 de traction passent au travers du tasseau 40.

Une telle configuration peut par exemple être obtenue par coulée de matière dans une gouttière ou moule linéaire.

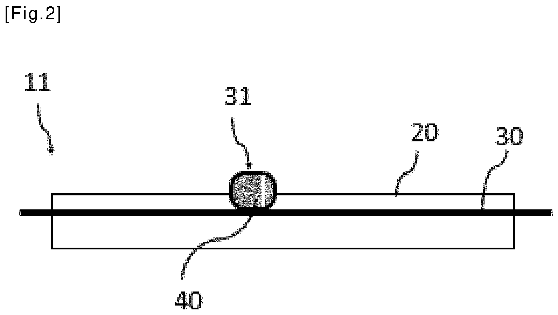

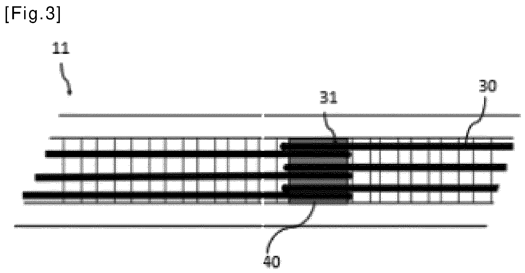

Les figures 2 et 3 montrent un ensemble de traction **11** qui diffère de l'ensemble de traction de la figure 1 principalement par le fait que le tasseau 40 est entouré par des câbles de traction 30 qui forment des boucles 31 autour du tasseau.

Les autres constituants peuvent être similaires à ceux présentés précédemment en relation avec l'exemple de la figure 1.

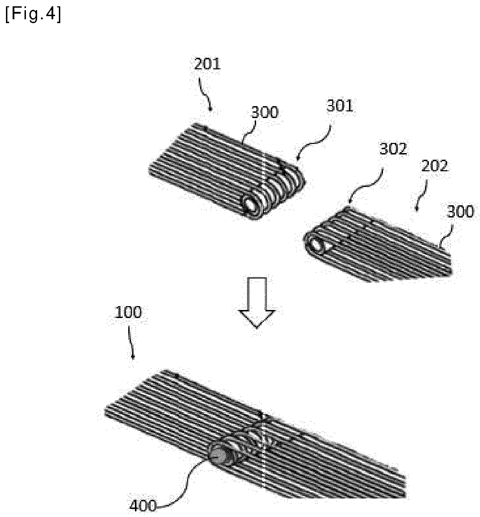

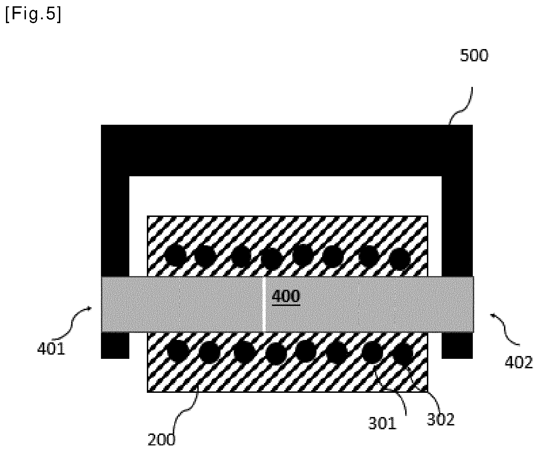

La figure 4 montre un troisième exemple de réalisation dans lequel l'ensemble de traction 100 comprend un corps souple qui comprend au moins deux portions 201, 202 destinées à être reliées entre elles. Pour faciliter la compréhension, seuls les câbles de traction 300 sont montrés, la matière qui les entoure n'est pas visible sur la figure 4, elle est néanmoins représentée sur la figure 5.

Les câbles de traction 300 de la première portion 201 comprennent des premiers anneaux de liaison 301 ; les câbles de traction 300 de la deuxième portion 202 comprennent des deuxièmes anneaux de liaison 302.

Les anneaux de liaison sont configurés pour s'emboiter entre eux et un tasseau 400 forme un axe de liaison entre les deux portions en passant par les premiers 301 et les deuxièmes 302 anneaux.

Comme cela est montré en figure 5, le tasseau 400 peut comprendre une première extrémité 401 saillante d'un côté du corps souple et une deuxième extrémité 402 saillante du côté opposé.

Le système d'accrochage peut comprendre un dispositif d'accrochage 500 ayant la forme d'un cavalier configuré pour être fixé audites deux extrémités 401, 402 du tasseau 400.

D'autres formes de dispositifs d'accrochage sont évidemment possibles pour l'exemple ci-dessus, mais aussi pour toutes les variantes d'ensembles de traction décrits dans cette demande.

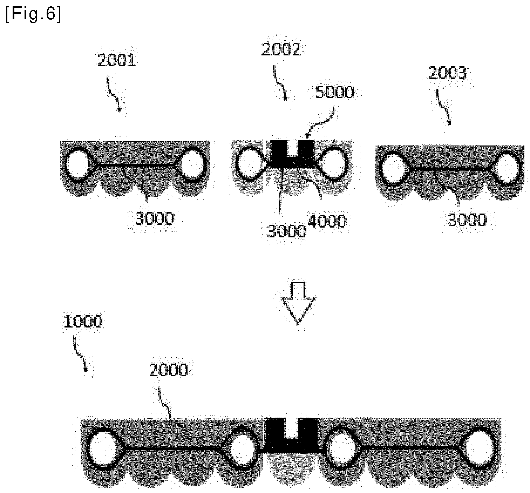

La figure 6 montre un troisième exemple de réalisation dans lequel l'ensemble de traction 1000 a une courroie 2000 dont le corps comprend une pluralité de portions 2001, 2002, 2003. Les portions de courroie sont configurées pour être fixées les unes aux autres pour former la courroie. Dans cette variante de réalisation, une portion 2002 peut comprendre un tasseau 4000, pouvant présenter une ouverture apte à recevoir une broche, comme cela se voir sur la figure 6. La courroie peut évidemment comprendre une pluralité de portions similaires à la portion 2002.

Dans ce cas, les portions qui comprennent un tasseau sont fabriquées séparément et ajoutées selon le besoin à la courroie. Ceci permet donc d'obtenir une courroie modulaire. Par exemple, s'il est constaté que la portion qui comprend un tasseau (donc qui est très sollicitée lors d'une traction) présente des signes de fatigue, elle peut être simplement remplacée. Ainsi la maintenance est facilitée.

Le système de traction selon l'une des combinaisons de caractéristiques décrites ci-dessus peut avantageusement être utilisé dans un système d'élévation de charges.

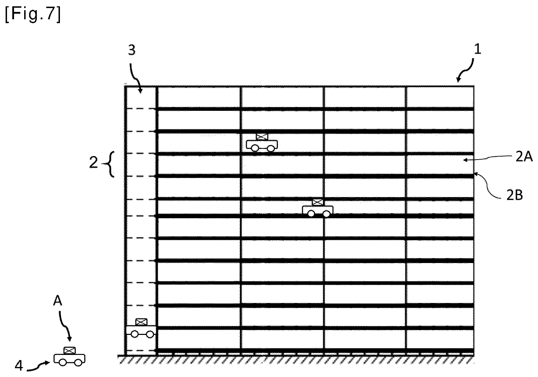

La figure 7 montre un exemple de système de stockage automatisé d'articles comprenant un système d'élévation tel que décrit ci-dessus.

Le système de stockage dans cet exemple comprend un stock formé par un rayonnage 1 tridimensionnel et une pluralité de chariots automatiquement guidés 4. Le rayonnage 1 comprend une pluralité de niveaux de stockage 2, chaque niveau de stockage 2 peut comprendre des emplacements pour stocker des articles, par exemple sous forme d'étagères 2A. Chaque niveau de stockage 2 peut comprendre en outre une allée 2B dans laquelle peut circuler un chariot 4 pour déposer ou prendre un article A. Dans des exemples de réalisation non illustrés, un niveau de stockage 2 peut comprendre une pluralité d'allées pour la circulation de chariots automatiquement guidés 4.

Le rayonnage 1 peut en outre comprendre une ou plusieurs colonnes 3 (par exemple sous forme de puits) reliant la pluralité de niveaux de stockage 2 et permettant le déplacement de chariots automatiquement guidés 4 d'un niveau 2 à l'autre, ou entre un niveau de stockage 2 et un niveau d'entrée/sortie. Par exemple, le niveau d'entrée/sortie peut être le niveau le plus bas (au niveau du sol), mais il peut aussi être le niveau le plus haut (le toit). Dans des exemples non illustrés, le niveau le plus bas peut être une entrée (ou sortie) et le niveau le plus haut une sortie (ou entrée).

Le système d'élévation tel que décrit ci-dessus peut être agencé dans la colonne 3 et peut comprendre une pluralité d'ensembles de traction selon l'invention. Chaque ensemble de traction comprend une courroie et au moins un tasseau, ainsi qu'un ou plusieurs dispositif(s) d'accrochage fixé(s) au tasseau. Le dispositif d'accrochage peut avoir différentes formes, par exemple la forme d'un cavalier comme montré par la figure 5 ou la forme d'un taquet.

Pour permettre l'élévation des chariots, chaque chariot automatiquement guidé 4 comprend des moyens d'accrochage configurés pour coopérer avec les dispositifs d'accrochage.

La colonne 3 comprend en outre des moyens de motorisation permettant de déplacer les courroies le long de la colonne provoquant ainsi le déplacement vertical des chariots 4, d'un niveau de stockage à l'autre.

## Revendications

1. Système d'élévation de charges adapté pour un système de stockage automatisé d'articles, le système d'élévation comportant un ensemble de traction (10 ; 11; 100; 1000) qui comprend :
- une courroie présentant un corps (20; 200; 2000) souple et une pluralité de câbles (30; 300; 3000) de traction noyés dans le corps (20; 200; 2000),
- au moins un tasseau (40; 400; 4000) de traction, configuré pour porter un dispositif d'accrochage (500; 5000) destiné à être fixé sur ledit tasseau,
dans lequel le tasseau (40; 400; 4000) présente une liaison mécanique directe avec tout ou partie de la pluralité des câbles (30; 300; 3000) de traction.

2. Système d'élévation selon la revendication 1, dans lequel des câbles (30) de traction passent au travers du tasseau (40).

3. Système d'élévation selon la revendication 1, dans lequel le tasseau (40) est entouré par des câbles de traction (30, 31 ; 300, 301, 302).

4. Système d'élévation selon l'une des revendications 2 ou 3, dans lequel le dispositif d'accrochage est un taquet.

5. Système d'élévation selon la revendication 3, dans lequel le corps (200) de courroie comprend deux portions (201, 202), la première portion (201) comprenant des câbles de traction (300) présentant des premiers anneaux de liaison (301), la deuxième portion (202) comprend des câbles de traction (300) présentant des deuxièmes anneaux de liaison (302), configurés pour s'emboiter avec lesdits premiers anneaux de liaison, le tasseau (400) formant un axe de liaison entre les deux portions passant par les premiers (301) et les deuxièmes (302) anneaux.

6. Système d'élévation selon la revendication 5, dans lequel le tasseau (400) comprend une première extrémité (401) et une deuxième extrémité (402), saillantes chacune d'un côté opposé du corps de la courroie (200), le dispositif d'accrochage (500) a la forme d'un cavalier configuré pour être fixé audites deux extrémités (401, 402) du tasseau (400).

7. Système d'élévation selon la revendication 1, dans lequel le corps de la courroie (2000) comprend une pluralité de portions (2001, 2002, 2003) configurées pour être fixées les unes aux autres pour former la courroie, au moins une portion (2002) comprend un tasseau (4000).

8. Système de stockage automatisé d'articles comprenant un système d'élévation selon l'une des revendications 1 à 7 et un chariot automatiquement guidé (4) comprenant un moyen d'accrochage configuré pour coopérer avec un dispositif d'accrochage (500, 5000) fixé à un tasseau (40; 400; 4000) d'un ensemble de traction (10 ; 11; 100; 1000).

9. Système de stockage automatisé d'articles selon la revendication 8, comprenant un rayonnage (1) présentant une pluralité de niveaux (2) de stockage d'articles (A), dans lequel ledit système d'élévation relie lesdits niveaux (2) de stockage et est apte à permettre le passage d'un chariot automatiquement guidé (4) d'un niveau de stockage (2) à l'autre.

## Patentansprüche

1. Lastenhubsystem, das für ein automatisiertes Artikellagerungssystem angepasst ist, wobei das Hubsystem eine Zugbaugruppe (10; 11; 100; 1000) aufweist, die umfasst:
- ein Zugkraftorgan, das einen biegsamen Körper (20; 200; 2000) und eine Vielzahl von in den Körper (20; 200; 2000) eingebetteten Zugkabeln (30; 300; 3000) vorweist,
- mindestens eine Zugklammer (40; 400; 4000), die zum Tragen einer Befestigungsvorrichtung (500; 5000) konfiguriert ist, die dazu bestimmt ist, an der Klammer angebracht zu werden,
wobei die Klammer (40; 400; 4000) eine direkte mechanische Verbindung mit allen oder einem Teil der Vielzahl von Zugkabeln (30; 300; 3000) vorweist.

2. Hubsystem nach Anspruch 1, wobei Zugkabel (30) durch die Klammer (40) verlaufen.

3. Hubsystem nach Anspruch 1, wobei die Klammer (40) von Zugkabeln (30, 31; 300, 301, 302) umgeben ist.

4. Hubsystem nach einem der Ansprüche 2 oder 3, wobei die Befestigungsvorrichtung ein Riegel ist.

5. Hubsystem nach Anspruch 3, wobei der Zugkraftorgankörper (200) zwei Abschnitte (201, 202) umfasst, der erste Abschnitt (201) umfassend Zugkabel (300), die erste Verbindungsringe (301) vorweisen, der zweite Abschnitt (202) Zugkabel (300) umfasst, die zweite Verbindungsringe (302) vorweisen, die zum Ineinanderpassen mit den ersten Verbindungsringen konfiguriert sind, wobei die Klammer (400) eine Verbindungsachse zwischen den zwei Abschnitten ausbildet, die durch die ersten (301) und die zweiten (302) Ringe verläuft.

6. Hubsystem nach Anspruch 5, wobei die Klammer (400) ein erstes Ende (401) und ein zweites Ende (402) umfasst, die jeweils von einer gegenüberliegenden Seite des Zugkraftorgankörpers (200) hervorstehen, wobei die Befestigungsvorrichtung (500) die Form eines Reiters hat, der konfiguriert ist, um an den zwei Enden (401, 402) der Klammer (400) angebracht zu werden.

7. Hubsystem nach Anspruch 1, wobei der Zugkraftorgankörper (2000) eine Vielzahl von Abschnitten (2001, 2002, 2003) umfasst, die konfiguriert sind, um zum Ausbilden des Zugkraftorgans aneinander angebracht zu werden, wobei mindestens ein Abschnitt (2002) eine Klammer (4000) umfasst.

8. Automatisiertes Artikellagerungssystem, umfassend ein Hubsystem nach einem der Ansprüche 1 bis 7 und einen automatisch gesteuerten Wagen (4), umfassend ein Befestigungsmittel, das zum Zusammenwirken mit einer Befestigungsvorrichtung (500, 5000) konfiguriert ist, die an einer Klammer (40; 400; 4000) einer Zugbaugruppe (10; 11; 100; 1000) angebracht ist.

9. Automatisiertes Artikellagerungssystem nach Anspruch 8, umfassend ein Etagengestell (1), das eine Vielzahl von Ebenen (2) zum Lagern von Artikeln (A) vorweist, wobei das Hubsystem die Lagerebenen (2) verbindet und geeignet ist, den Übergang eines automatisch gesteuerten Wagens (4) von einer Lagerebene (2) zu der anderen zu ermöglichen.

## Claims

1. Lifting system for loads, which lifting system is suitable for an automated storage system for items, the lifting system comprising a traction assembly (10; 11; 100; 1000) which includes:
- a belt having a flexible body (20; 200; 2000) and a plurality of traction cables (30; 300; 3000) embedded in the body (20; 200; 2000),
- at least one traction cleat (40; 400; 4000) designed to support a hooking device (500; 5000) intended to be attached to said cleat,
wherein the cleat (40; 400; 4000) has a direct mechanical connection to all or part of the plurality of traction cables (30; 300; 3000).

2. Lifting system according to claim 1, wherein the traction cables (30) pass through the cleat (40).

3. Lifting system according to claim 1, wherein the traction cables (30, 31; 300, 301, 302) surround the cleat (40).

4. Lifting system according to either of claims 2 or 3, wherein the hooking device is a catch.

5. Lifting system according to claim 3, wherein the belt body (200) comprises two portions (201, 202), the first portion (201) comprising traction cables (300) having first connecting rings (301), the second portion (202) comprising traction cables (300) having second connecting rings (302) which are designed to fit together with said first connecting rings, the cleat (400) forming a connecting pin between the two portions and passing through the first rings (301) and second rings (302).

6. Lifting system according to claim 5, wherein the cleat (400) comprises a first end (401) and a second end (402), each projecting from an opposite side of the belt body (200), the hooking device (500) being in the shape of a support frame designed to be attached to said two ends (401, 402) of the cleat (400).

7. Lifting system according to claim 1, wherein the belt body (2000) comprises a plurality of portions (2001, 2002, 2003) designed to be attached to one another to form the belt, at least one portion (2002) comprising a cleat (4000).

8. Automated storage system for items, which storage system comprises a lifting system according to any of claims 1 to 7 and an automatically guided carriage (4) comprising a hooking means designed to cooperate with a hooking device (500, 5000) attached to a cleat (40; 400; 4000) of a traction assembly (10; 11; 100; 1000).

9. Automated storage system for items according to claim 8, comprising a rack (1) having a plurality of levels (2) for storing articles (A), wherein said lifting system connects said storage levels (2) and is capable of allowing an automatically guided carriage (4) to pass from one storage level (2) to another.
